# EUROPÄISCHE PATENTSCHRIFT

(11) **EP 0 673 864 B1**
(45) Veröffentlichungstag und Bekanntmachung des Hinweises auf die Patenterteilung: **03.02.1999**
(21) Anmeldenummer: 94118803.9
(22) Anmeldetag: 30.11.1994
(51) Int. Cl.: B65G 53/60, B04C 5/15

(54) **Verschluss für ein im Unterdruck arbeitendes Fördergerät**
Closure for a conveying apparatus working under depression
Fermeture pour appareil de convoyage à vide

(30) Priorität: 24.03.1994 DE 4410087
(43) Veröffentlichungstag der Anmeldung: 27.09.1995
(73) Patentinhaber: FILTERWERK MANN & HUMMEL GMBH, 71631 Ludwigsburg (DE)
(72) Erfinder: Bauer, Michael, D-71336 Waiblingen (DE); Brandauer, Otto, D-75417 Mühlacker (DE); Kemmler, Dieter, D-71642 Ludwigsburg (DE)
(74) Vertreter: Voth, Gerhard, Dipl.-Ing.

(56) Entgegenhaltungen:
- CH-A- 146 066
- DE-A- 3 406 824
- DE-A- 3 901 110
- DE-B- 1 175 152
- DE-B- 1 246 553
- DE-B- 2 304 336
- DE-C- 616 592
- FR-A- 2 524 821
- GB-A- 2 166 068

## Beschreibung

Die Erfindung betrifft einen Verschluß für den Auslauf eines im Unterdruck arbeitendes Fördergerät nach dem Oberbegriff des unabhängigen Anspruchs 1.

Ein solches Fördergerät ist beispielsweise aus dem Prospekt der Mann + Hummel GmbH, VKD 287.2 D bekannt und dient zum Fördern von Kunststoffgranulat. Das Fördergerät arbeitet mit einem Sauggebläse. Durch den Unterdruck wird Kunststoffgranulat aus einem Behälter in das Gerät gefördert. Nach Ablauf einer eingestellten Förderzeit schaltet das Sauggebläse ab. Das im Fördergerät befindliche Fördergut drückt eine am Auslauf angeordnete Klappe auf und fließt aus. Nachdem das Fördergut ausgelaufen ist, drückt ein Gegengewicht die Klappe zu und der Saugvorgang beginnt von neuem.

Die GB-A-21 66 068 beschreibt einen Verschluß für einen Behälter, wie er üblicherweise verwendet wird, nämlich einen Kegel der durch eine Führungsstange nach oben bzw. nach unten bewegt wird.

Die DE-B-23 04 336 beschreibt einen Abscheider der im Unterdruck arbeitet. Für den Verschluß ist entweder ein Kegel oder eine Kugel vorgesehen. Sowohl Kegel als auch Kugel werden über eine Kette gehalten und verschließen bzw. öffnen den Auslaß.

Der Nachteil dieser bekannten Verschlußelemente ist darin zu sehen, daß sich diese im Bereich der Kontaktstellen sehr stark abnutzen und im Laufe der Zeit Dichtheitsprobleme am Auslaß entstehen. Durch das Abnutzen der Verschlußelemente gelangen Fremdstoffe in das Granulat und können es verunreinigen.

Es ist ferner aus der DE-OS 34 06 824 ein Glockenventil zur Absperrung eines Auslaufs bekannt. Dieses Glockenventil wird insbesondere dort benutzt, wo stark abrasive Medien verarbeitet werden. Damit kein Abrieb an dem Glockenventil und den weiteren mechanischen Bestandteilen des Ventils erfolgt, ist eine Schutzhülse vorgesehen, die an einem Führungskörper anliegt. Anstelle von Drehklappen oder Glockenventilen können auch Kugelhähne oder Quetschventile eingesetzt werden. Diese sind elektropneumatisch betätigbar.

Eine Besonderheit bei der Beschickung von Kunststoffverarbeitungs-Maschinen stellt die Beschickung von Kabelummantelungs-Extrudern für die Herstellung von vernetzten Polyäthylen-Kabel dar. Diese Kabel werden ausnahmslos im Hochspannungsbereich bis zu 440 KV eingesetzt. Dabei muß die PE-Isolierschicht nicht nur eine gewisse Mindestdicke für die Isolierung aufweisen, sondern muß von größter Materialreinheit sein. Bereits Spuren von Fremdkörpern in der Größenordnung von 40 µm können infolge eines Langzeiteffektes die Isolierung des Kabels beeinträchtigen und zu einem Durchschlag führen. Deshalb sind alle Teile, die mit dem Kabelummantelungs-Material in Berührung kommen, ausnahmslos in Edelstahl mit elektrolytisch polierter Oberfläche hergestellt, so daß keinerlei Abrieb oder Fremdstoffe in die Isoliermasse gelangen können. Da es sich bei diesem Polyäthylen um vernetzbares Material handelt, ist dem Polyäthylen ein Teil Peroxyd, welches für die Vernetzung notwendig ist, beigegeben. Dieses Peroxyd hat die unangenehme Eigenschaft, daß es sich vom Granulat absondert und sich an toten Ecken eines Aggregates festsetzt, dort altert und sich beim Ablösen im Extrudat zu einer Qualitätsverminderung führt. Deshalb müssen die Aggregate zum Transport und Handling dieses Materials neben einer absolut rostfreien hochglanzpolierten Oberfläche in ihrer Form so gestaltet sein, daß sie keine toten Ecken aufweisen.

Die herkömmlichen Verschlüsse von Fördergeräten haben in dieser Hinsicht keine befriedigende Lösung gebracht, da jede Art von bewegter Klappe feinsten metallischen Abrieb verursacht und die Gestaltung als totraumfreie Einrichtung nicht möglich war.

Ein neuartiger Verschluß eines Fördergerätes soll diesen Nachteil beseitigen.
Der Erfindung liegt daher die Aufgabe zugrunde, einen Verschluß zu schaffen, der die geschilderten Nachteile vermeidet, kostengünstig herstellbar ist und für den Anwendungszweck keinen schädlichen Abrieb verursacht. Diese Aufgabe wird ausgehend von dem Oberbegriff des unabhängigen Anspruchs 1 durch dessen kennzeichnende Merkmale gelöst.
Der Vorteil des erfindungsgemäßen Verschlusses besteht darin, daß er vollkommen totraumfrei ist, da alle Innenseiten der Auslaufeinrichtung und die Kugel selbst von ausfließendem Material umspült werden und keinerlei Anbackungen möglich sind. Des weiteren entsteht kein metallischer Abrieb, da nur Anpreßkräfte und keine Reibung bzw. keine Relativbewegung zwischen den einzelnen Metalloberflächen stattfindet.
Durch diese Anordnung werden die Nachteile von herkömmlichen Fördergeräten auf einfachste Art wirkungsvoll beseitigt.

Eine weitere vorteilhafte Ausgestaltung der Erfindung besteht darin, daß der Auslaufquerschnitt punktsymmetrisch ausgeführt ist und keinerlei strömungstote Flächen aufweist. Damit wird gewährleistet, daß das Material aus dem Behälter vollständig entleert werden kann.

Gemäß einer Weiterbildung der Erfindung besteht die Kugel aus dem gleichen Material wie das zu fördernde Schüttgut, d.h. wie das zu fördernde Kunststoffgranulat. Dies hat den Vorteil, daß beim Auftreten von elektrostatischen Ladungen infolge Reibung beider Materialien Schüttgut und Kugel die gleiche Ladung aufweisen und sich gegenseitig abstoßen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels dargestellt.

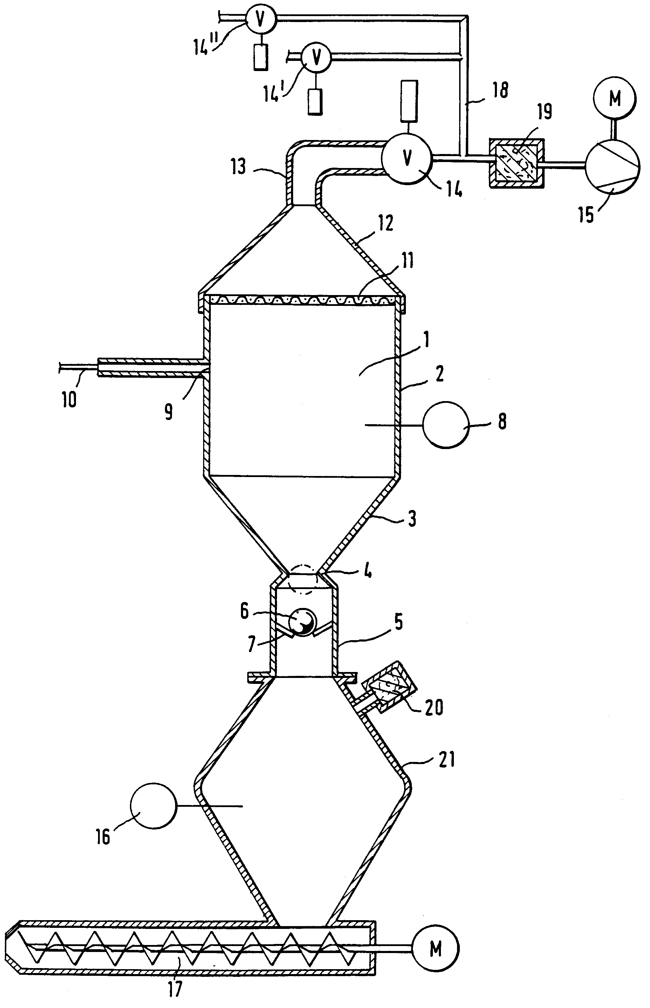

Die Figur zeigt:
Ein Fördergerät für Schüttgut mit einem Kugelverschluß.

Das Fördergerät 1 besteht aus einem zylindrischen Mantel 2 und einem konischen Auslauf 3. Der konische Auslauf 3 endet in einer Auslauföffnung 4, welche den engsten Querschnitt des Auslaßkanals 5 darstellt. Im Auslaßkanal 5 befindet sich eine Kugel 6, welche im Ruhezustand auf einer Stützvorrichtung 7 in Form eines Sützkreuzes aufliegt. Die Förderstation ist des weiteren mit einem Füllungsmelder 8 ausgerüstet und besitzt einen Einlauf 9, in den das Material über die Förderleitung 10, vom Vorratsbehälter kommend, eintritt. Im oberen Teil des. Fördergerätes befindet sich ein grobes Sieb 11. Darüber ist ein abnehmbarer Deckel 12 angeordnet. In diesem Deckel befindet sich die Reinluftöffnung 13, welche mit einem Förderventil 14 verschlossen werden kann. An einem Fördergebläse 15 können mehrere, hier nicht dargestellte Förderstationen über weitere Ventile 14' und 14'' aufgeschaltet werden. Unterhalb des Fördergerätes befindet sich ein Maschinentrichter 21, welcher mit einem weiteren Füllungsmelder 16 ausgerüstet und direkt auf die Verarbeitungsmaschine 17 aufgebaut ist. Zur Abscheidung von Feinstpartikeln ist in der Reinluftleitung 18 ein Filter 19 eingebaut. Ein weiteres Filter 20 befindet sich auf dem Trichter der Verarbeitungsmaschine, so daß atmosphärische Luft zum Druckausgleich in den Trichter einströmen kann. Die Förderanlage wird durch eine Steuerung aktiviert, und zwar in der Weise, daß bei Ansprechen des Nachfüllmelders 16 das Förderventil 14 geöffnet wird und das Fördergebläse 15 an läuft. Dadurch entsteht eine Luftströmung, die einerseits bewirkt, daß Material vom Vorratsbehälter in das Fördergerät angesaugt wird, andererseits die Kugel 6 durch die einsetzende Strömung angehoben (gestrichelt gezeichnete Stellung) und gegen den Auslauf 4 dichtschließend gepreßt wird. Damit ist die Voraussetzung gegeben, daß eine Befüllung des Fördergerätes bis zum Ansprechen des Füllstandsmelders 8 durchgeführt wird. Danach wird die Klappe 14 geschlossen, das Gebläse 15 ausgeschaltet oder bei Bedarf das nächst zu befüllende Fördergerät über 14' bzw. 14'' aufgeschaltet. Durch das Schließen der Klappe 14 tritt im Fördergerät durch nachströmende Luft über die Förderleitung ein atmosphärischer Druck ein, so daß das Eigengewicht des eingeförderten Granulates und das Eigengewicht der Kugel selbst, die Öffnung 4 freigibt und das Material in den Extrudertrichter austreten kann.

Dieser Ablauf wiederholt sich fortlaufend, so daß die Verarbeitungsmaschine jederzeit ausreichend mit Material versorgt ist.

## Patentansprüche

1. Verschluß für den Auslauf eines im Unterdruck arbeitenden Fördergerätes (11) für Schüttgüter, wobei der Auslauf (3) einen kreisrunden Querschnitt aufweist und der Verschluß durch eine Kugel (6) gebildet ist, dadurch gekennzeichnet, daß die Kugel (6) in der Offenstellung auf einer Abstützung aufliegt und sich ohne Verbindung zu anderen beweglichen Teilen des Fördergerätes (1) und reibungsfrei zwischen der Geschlossen-und Offenstellung bewegt.

2. Verschluß nach Anspruch 1, dadurch gekennzeichnet, daß sich die Kugel (6) auf einer Stützvorrichtung (7) zentriert und dadurch ein ringförmiger Auslaßquerschnitt gebildet wird, der nur durch die Streben der Stützvorrichtung (7) unterbrochen ist.

3. Verschluß nach einem der vorherigen Ansprüche, dadurch gekennzeichnet, daß der Auslauf (3) trichterförmig oder punktsymmetrisch gestaltet ist.

4. Verschuß nach einem der vorherigen Ansprüche, dadurch gekennzeichnet, daß die Kugel (6) aus dem Material des zu fördernden Schüttgutes besteht.

## Claims

1. Closure for the outlet of a conveyor (17) for loose materials working under reduced pressure, the outlet (3) having a circular cross-section, and the closure being formed by a ball (6), characterised in that the ball (6) rests on a support in the open position and moves between the closed and open positions without connecting with other moving parts of the conveyor (1) and without friction.

2. Closure according to claim 1, characterised in that the ball (6) is centred on a supporting device (7), and an annular outlet cross-section is thereby formed, which is only interrupted by the struts of the supporting device (7).

3. Closure according to one of the preceding claims, characterised in that the outlet (3) has a funnel-shaped or point-symmetrical configuration.

4. Closure according to one of the preceding claims, characterised in that the ball (6) is formed from the material of the loose material to be conveyed.

## Revendications

1. Fermeture destinée à la sortie d'un transporteur (11) d'un produit en vrac, fonctionnant sous vide, cette sortie (3) ayant une section circulaire et la fermeture étant assurée par une bille (6),
caractérisée en ce que
la bille (6), en position d'ouverture, repose sur un appui et, sans être reliée aux autres parties mobiles du transporteur (1), se déplace sans frottement entre sa position d'ouverture et sa position de fermeture.

2. Fermeture selon la revendication 1,
caractérisée en ce que
la bille (6) est centrée sur un dispositif de soutien (7) et de ce fait définit une section de sortie ayant la forme d'un anneau interrompu seulement par les branches du dispositif de soutien (7).

3. Fermeture selon l'une des revendications précédentes,
caractérisée en ce que
la sortie (3) a la forme d'un entonnoir ou présente une symétrie ponctuelle.

4. Fermeture selon l'une des revendications précédentes,
caractérisée en ce que
la bille (6) est faite du même matériau que le produit qu'il s'agit de transporter.
